# EUROPEAN PATENT APPLICATION

(11) **EP 3 012 803 A1**
(43) Date of publication of application: **27.04.2016**
(21) Application number: 14814421.5
(22) Date of filing: 26.05.2014
(51) Int. Cl.: G06T 7/00

(54) **IMAGE PROCESSING METHOD, IMAGE PROCESSING DEVICE, AND IMAGE PROCESSING PROGRAM**

(30) Priority: 17.06.2013 JP 2013126382
(71) Applicant: Konica Minolta, Inc., Tokyo 100-7015 (JP)
(72) Inventor: FUJIWARA, Koji, Tokyo 100-7015 (JP)
(74) Representative: Hoffmann Eitle
(86) International application number: PCT/JP2014/063826
(87) International publication number: WO 2014/203687

(57) **Abstract**

There are provided an image processing method, an image processing device, and an image processing program for speeding up a template matching process by performing template matching based on an image size in which the amount of operation in the template matching becomes small. The image processing method includes: accepting (520) a setting of an area in a registered image (413) acquired by shooting a target object as a reference; deciding (540) on an image size in which the amount of operation in the matching process associated in advance with the image size becomes relatively small, from among image sizes within a predetermined range with respect to the size of the accepted area; and generating (550) the template from the registered image based on information on the area of the decided image size.

## Description

### Technical Field

The present invention relates to an image processing method, an image processing device, and an image processing program by which to perform a matching process using a template.

### Background Art

In the factory automation (FA) field, there have been developed techniques for automation of production process at plants and others by optically inspecting an inspection target object such as work for defects or the like. One of techniques for optical inspection is template matching.

Template matching is a technique for searching an input image for an area matching a pre-registered template. In the FA field, an image acquired by shooting work as a reference is used as a template. Image processing devices in the FA field perform template matching with the template and the input image acquired by shooting an inspection target object such as work. This allows automatic inspection of the work for defects or the like.

In recent years, there have been developed techniques for improving the processing speed while keeping the accuracy of template matching. For example, JP 2000-3444 A

(Patent Literature 1) discloses a technique for performing an inverse Fourier transform on the product (cross-power spectrum) of Fourier transform results of an observed image and a reference image by adding an area with a predetermined width of a constant value (specifically, 0) to the observed image and the reference image as pre-processing to set the vertical and horizontal dimensions of the images to pixels with the factorial of 2, for the purpose of devising a calculation method for correlation coefficients with a small amount of operation so that the method can also be applied to high-speed processing without restriction on patterns by spatial frequencies (see Abstract).

### Citation List

### Patent Literature

Patent Literature 1: JP 2000-3444 A

### Summary of Invention

### Technical Problem

It is known that Fourier transforms such as fast Fourier transform (FFT) can be performed at high speeds with images having vertical and horizontal dimensions with the factorial of 2. According to the technique disclosed in Patent Literature 1, a predetermined width is added (padded) to the observed image and the reference image for use in template matching to set the vertical and horizontal dimensions of the images to the factorial of 2. However, padding the horizontal and vertical dimensions of the images to the factorial of 2 may increase the operation time on the contrary.

Therefore, there is the need for techniques for performing a matching process based on an image size in which the amount of operation in the matching process becomes relatively small.

This disclosure is made to solve the foregoing problem. An object of this disclosure in an aspect is to provide a method, a device, and a program for speeding up a template matching process by performing template matching based on an image size in which the amount of operation in the template matching becomes small.

### Solution to Problem

According to an embodiment there is provided an image processing method for performing a matching process using a template. The image processing method includes: accepting a setting of an area in a registered image acquired by shooting a target object as a reference; deciding on an image size in which the amount of operation in the matching process associated in advance with the image size becomes relatively small, from among image sizes within a predetermined range with respect to the size of the accepted area; and generating the template from the registered image based on information on the area of the decided image size.

Preferably, the deciding includes deciding an image size in which the amount of operation in the matching process becomes the smallest, from among the image sizes within the predetermined range with respect to the size of the accepted area.

Preferably, the deciding includes deciding an image size with a vertical width smaller than the vertical width of the size of the accepted area.

Preferably, the deciding includes deciding an image size with a horizontal width smaller than the horizontal width of the size of the accepted area.

Preferably, the center of the area of the decided image size aligns with the center of the accepted area.

Preferably, the generating includes generating the template from the registered image such that the degree of variation in an area in the registered image sandwiched between an outer frame of the same size as the decided image size and an inner frame inside the outer frame becomes relatively small.

Preferably, the deciding includes, when the amount of operation corresponding to the image size is unknown, estimating the amount of operation associated with the image size based on known amounts of operation associated with the image sizes within the predetermined range with respect to the image size.

Preferably, the amount of operation is the actually measured operation time of the entire or partial matching process.

Preferably, the amount of operation is decided based on the image size and the amount of calculation in the matching process.

Preferably, the matching process includes a process for detecting the position of an inspection target object from the input image acquired by shooting the inspection target object. The amount of operation is decided based on the time taken for detecting the position.

Preferably, the amount of operation is decided based on the time taken for a Fourier transform in the matching process.

Preferably, the image processing method further includes updating the amount of operation associated in advance with the image size.

According to another embodiment, there is provided an image processing device for performing a matching process using a template. The image processing device includes: an acceptance unit for accepting a setting of an area in a registered image acquired by shooting a target object as a reference; a decision unit for deciding on an image size in which the amount of operation in the matching process associated in advance with the image size becomes relatively small, from among image sizes within a predetermined range with respect to the size of the accepted area; and a generation unit for generating the template from the registered image based on information on the area of the decided image size.

Preferably, the image processing device further includes a storage unit for storing a table prescribing the relationship between the image size and the amount of operation in the matching process. The decision unit is configured to refer to the table to decide on an image size in which the amount of operation in the matching process becomes relatively small.

According to yet another embodiment, there is provided an image processing program for causing a computer to execute a matching process using a template. The program causes the computer to execute: accepting a setting of an area in a registered image acquired by shooting a target object as a reference; deciding on an image size in which the amount of operation in the matching process associated in advance with the image size becomes relatively small, from among image sizes within a predetermined range with respect to the size of the accepted area; and generating the template from the registered image based on information on the area of the decided image size.

In one aspect, by performing the matching process based on the image size in which the amount of operation in the matching process becomes relatively small, it is possible to speed up the template matching process.

The foregoing and other objects, features, aspects, and advantages of the present invention will be clarified from the following detailed descriptions of the present invention understood in relation to the accompanying drawings.

### Brief Description of Drawings

Fig. 1 is a schematic view of an entire configuration of an image processing system.
Fig. 2 is a block diagram illustrating an example of a functional configuration of an image processing device.
Fig. 3 is a diagram illustrating the relationship between image size and the amount of operation in template matching.
Fig. 4 is a block diagram illustrating an example of a hardware configuration of the image processing device.
Fig. 5 is a block diagram illustrating an example of a functional configuration of an image processing device according to a first embodiment.
Fig. 6 is a diagram illustrating a set area in a registered image.
Fig. 7 is a diagram illustrating a data structure of a table.
Fig. 8 is a block diagram illustrating an example of a functional configuration of a position and posture detection unit.
Fig. 9 is a flowchart of part of a process executed by the image processing device.
Fig. 10 is a diagram illustrating a set area.
Fig. 11 is a block diagram illustrating an example of a functional configuration of an image processing device according to a second embodiment.
Fig. 12 is a diagram illustrating the state where the registered image is scanned to calculate the degree of variation in a boundary area.
Fig. 13 is a block diagram illustrating an example of a functional configuration of an image processing device according to a third embodiment.
Fig. 14 is a flowchart of part of a process executed by an image processing device according to a fourth embodiment.
Fig. 15 is a block diagram illustrating an example of a functional configuration of an image processing device according to a fifth embodiment.

### Description of Embodiments

Embodiments will be described with reference to the drawings. In the following description, the same components and constituent elements are given the same reference signs. Their respective names and functions are also the same.

Therefore, detailed descriptions thereof are not repeated.

### <Entire Device Configuration>

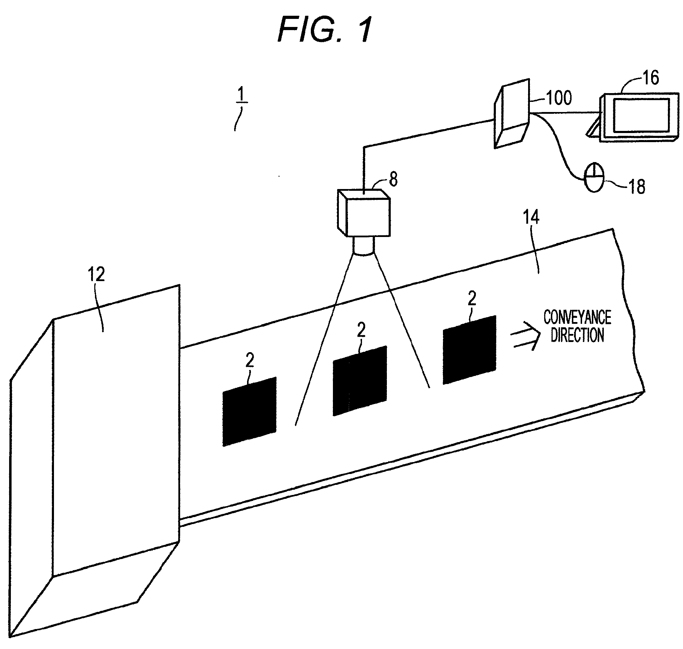

Fig. 1 is a schematic view of an entire configuration of an image processing system 1 including an image processing device 100 according to this embodiment. Referring to Fig. 1, the image processing system 1 inspects optically an inspection target object (hereinafter, also referred to as "work") for defects and soiling, for example. More specifically, the image processing system 1 is incorporated in a production line or the like to perform template matching of an image acquired by shooting work 2 with a pre-registered template.

The image processing system 1 includes a camera 8, a manufacturing device 12, a conveyance mechanism 14, a display device 16, a mouse 18, and the image processing device 100.

The manufacturing device 12 is a device for manufacturing the work 2. For example, the work 2 is a mechanical component such as a circuit board. When manufactured by the manufacturing device 12, the work 2 is conveyed by the conveyance mechanism 14 such as a belt conveyor. The conveyed work 2 is shot by the camera 8 at a predetermined timing. The image acquired by the camera 8 is transmitted to the image processing device 100.

The image processing device 100 has a registration mode for registering a template and an inspection mode for inspecting the work 2. The user can alternately switch between the inspection mode and the registration mode by an input device such as the mouse 18.

In the registration mode, the image processing device 100 generates a template image from the image acquired by shooting the target work 2 as a reference (hereinafter, also referred to as "registered image"). In the inspection mode, the image processing device 100 performs template matching with an image acquired by shooting the inspection target object such as the work 2 (hereinafter, also referred to as "input image") and the template image. Accordingly, the image processing system 1 automatically inspects the work 2 for defects or the like.

### <Functional Configuration>

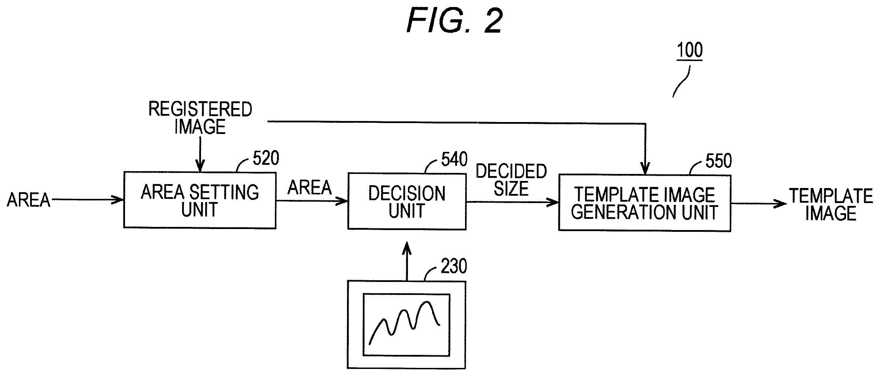

Fig. 2 is a block diagram illustrating an example of a functional configuration of the image processing device 100. Referring to Fig. 2, the general outline of a functional configuration of the image processing device 100 will be described.

The image processing device 100 includes operation amount information 230, an area setting unit 520, a decision unit 540, and a template image generation unit 550.

The area setting unit 520 accepts a setting of an area in the registered image. For example, the user sets an area in the registered image displayed on the display device 16 using an input device such as the mouse 18. The area setting unit 520 outputs the area in the registered image set by the user (hereinafter, also referred to as "set area") to the decision unit 540. The set area will be described later in detail.

The decision unit 540 decides on an image size in which the amount of operation in a template matching process associated in advance with the image size becomes relatively small (hereinafter, also referred to as "decided size"), from among image sizes within a predetermined range with respect to the size of the set area. For example, the operation amount information 230 prescribes the amount of operation in the template matching process associated in advance with the image size. The decision unit 540 decides on the image size from the set area and the operation amount information 230 and outputs information on the image size to the template image generation unit 550.

The operation amount information 230 is typically defined in a table representing the relationship between the image size and the amount of operation in template matching. The table will be described later in detail. Alternatively, the operation amount information 230 may be defined in an approximate expression representing the relationship between the image size and the amount of operation in template matching. The approximate expression will be described later in detail.

The template image generation unit 550 generates a template image from a registered image 413 based on the information about the area of the image size decided by the decision unit 540. The template image generation unit 550 typically cuts out the template image from the registered image 413 in the image size decided by the decision unit 540. The image processing device 100 performs template matching with the template image and an input image.

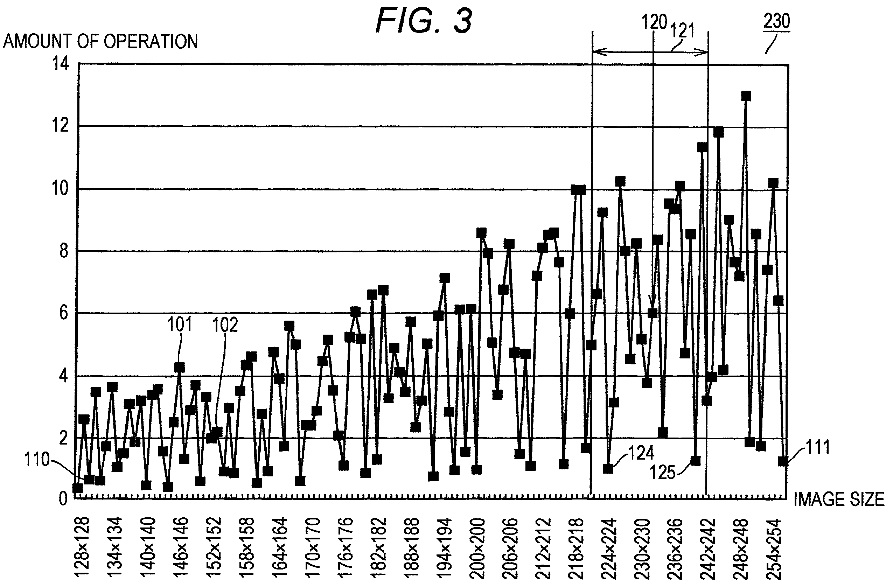

Fig. 3 is a diagram illustrating the relationship between the image size and the amount of operation in template matching. Referring to Fig. 3, the general outline of the process at the image processing device 100 will be described.

The vertical axis of the operation amount information 230 (the amount of operation) indicates the entire or partial amount of operation in the template matching process. For example, the amount of operation is expressed as the entirely or partially measured operation time of the template matching process.

The horizontal axis of the operation amount information 230 (image size) indicates the vertical and horizontal dimensions of the image for use in the template matching process. As illustrated in Fig. 3, the amount of operation in template matching does not increase in proportion to the vertical and horizontal dimensions of the image.

For example, the amount of operation in template matching at a point 101 is about 4.2. The amount of operation in template matching at a point 102 where the image size is larger than at the point 101 is about 2.1. In this manner, the amount of operation may decrease despite the increase of the image size for use in template matching.

In the case of performing an FFT in template matching, it is known that using the image having vertical and horizontal dimensions with the factorial of 2 could increase the processing speed. Accordingly, template matching is frequently conducted with the vertical and horizontal dimensions of the registered image padded to the factorial of 2. However, performing an FFT with the simply padded image may increase the amount of operation.

For example, as indicated at a point 110, when the image size is 130 × 130, the amount of operation is about 0.8. When the image at the point 110 is padded to the factorial of 2, the image size becomes 256 × 256 (256 = 2 raised to the 8^{th} power). As indicated at a point 111, when the image size is 256 × 256, the amount of operation is about 1.4. In this manner, the amount of operation may increase when the vertical and horizontal dimensions are padded to the factorial of 2.

To prevent increase in the amount of operation as in the foregoing case, the image processing device 100 decides on an appropriate image size in which the amount of operation in template matching becomes small, and generates the template image from the registered image based on the information on the area of the image size.

More specifically, the decision unit 540 refers to the operation amount information 230 to decide on the image size in which the amount of operation in the template matching process associated in advance with the image size becomes relatively small, from among the image sizes within a predetermined range with respect to the set area.

For example, when the set area has a size of 232 × 232 (at a point 120), the decision unit 540 decides on the image size in which the amount of operation in the template matching process becomes relatively small, from among the image sizes within a predetermined range 121 with respect to the point 120. In this case, as illustrated in Fig. 3, the decision unit 540 decides on the size of 224 × 224 (at a point 124) with the smallest amount of operation as the size of the template image. The template image generation unit 550 cuts out and generates the template image with the size of 224 × 224 (at the point 124) from the registered image.

When the result of the template matching with the template image of the size of 224 × 224 (at the point 124) is unfavorable, the decision unit 540 may decide on the size at a point 125 with the smallest amount of operation next to the size at the point 124 as the size of the template image.

Needless to say, the image processing device 100 may decide on an image size smaller than the size of the set area or may decide on an image size larger than the size of the set area.

The image processing device 100 performs template matching of the template image of the image size with a relatively small amount of operation and the input image, thereby speeding up the template matching process with a smaller amount of operation in the template matching process.

### <Hardware Configuration>

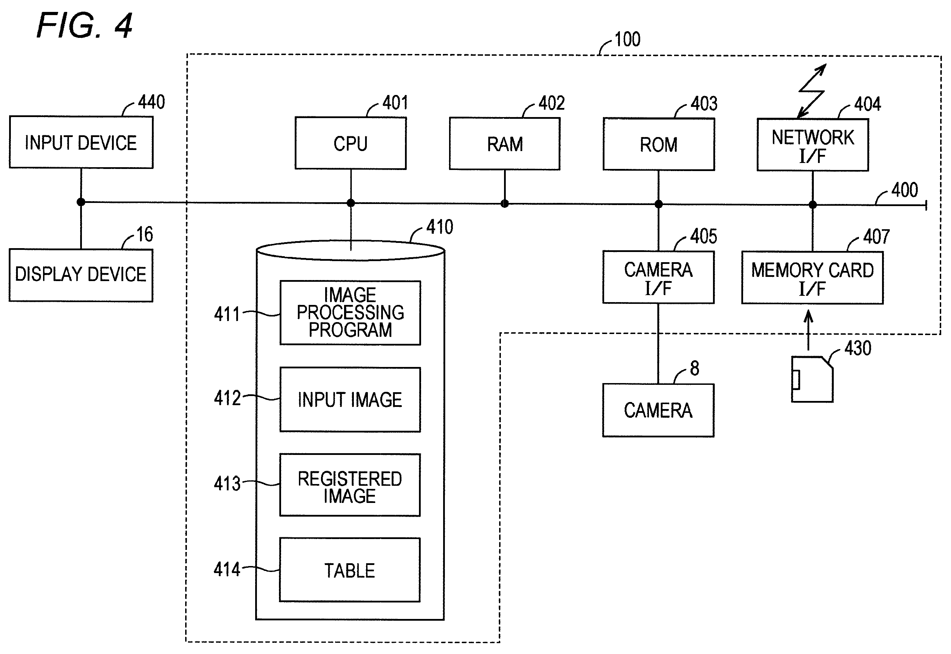

Fig. 4 is a block diagram illustrating an example of a hardware configuration of the image processing device 100. The hardware configuration of the image processing device 100 will be described with reference to Fig. 4.

Referring to Fig. 4, the image processing device 100 is generally implemented on a computer with a versatile architecture. The image processing device 100 includes a CPU (central processing unit) 401, a RAM (random access memory) 402, a ROM (read only memory) 403, a network interface (I/F) 404, a camera interface (I/F) 405, a memory card interface (I/F) 407, and an auxiliary storage device 410, as major components. The camera 8, the display device 16, an input device 440 are connected to the image processing device 100. These components are connected together in a mutually communicable manner via a bus 400.

The CPU 401 executes various programs such as an operating system (OS) and an image processing program stored in the ROM 403, the auxiliary storage device 410, and the like to control the entire image processing device 100.

The RAM 402 serves as a working memory for executing programs by the CPU 401, and stores primarily various data necessary for execution of the programs.

The ROM 403 stores an initial program (boot program) and the like to be executed at the startup of the image processing device 100.

The network I/F 404 exchanges data with other devices (such as a server device) via various communication media. More specifically, the network I/F 404 conducts data communications via wired lines (LAN (local area network) and WAN (wide area network)) such as Ethernet (registered trademark) and the like) and/or wireless lines such as a wireless LAN.

The camera I/F 405 mediates data communications between the CPU 401 and the camera 8. For example, the camera I/F 405 includes an image buffer to accumulate temporarily data of registered images and input images transmitted from the camera 8. When at least one frame of input image data is accumulated, the camera I/F 405 transfers the accumulated data to the auxiliary storage device 410 or the ROM 403. The camera I/F 405 also gives an instruction for imaging to the camera 8 according to an internal command issued by the CPU 401.

The memory card I/F 407 reads data from or writes data into various memory cards (non-volatile storage media) 330 such as an SD (secure digital) card or a CF (Compact Flash (registered trademark)) card. Typically, a memory card 430 storing the input image acquired by some device is attached to the memory card I/F 407 to read the input image from the memory card 430 and store the same in the auxiliary storage device 410.

The auxiliary storage device 410 typically includes a large-capacity magnetic storage medium such as a hard disk. The auxiliary storage device 410 stores an image processing program 411 for implementing various according to this embodiment, an input image 412, a registered image 413, and a table 414. The auxiliary storage device 410 may further store programs such as an operating system. The table 414 will be described later in detail.

The image processing device 100 may not have the function of imaging the work. Instead, some mechanism similar to a digital camera may acquire the input image and the registered image and input the same into the image processing device 100 in an arbitrary method. More specifically, these images are input into the image processing device 100 via the network I/F 404 and the memory card I/F 407.

The image processing program 411 to be stored in the auxiliary storage device 410 is held and delivered in a storage medium such as a CD-ROM (compact disk-read only memory), or is distributed from a server device or the like via a network. The image processing program 411 may implement image processing by calling required ones of program modules provided as part of the operating system executed on the image processing device 100 at a predetermined timing and in predetermined order. In this case, the image processing program 411 does not include the modules provided by the operating system but implements the image processing in cooperation with the operating system.

The image processing program 411 may not be provided as a single program but may be incorporated in certain programs. Also in such a case, the image processing program 411 does not include the modules for use in common among the programs but implements the image processing in cooperation with the certain programs. The image processing program 411 not including some of the modules as described above does not deviate from the gist of the image processing device 100 according to this embodiment. Further, some or all of the functions provided by the image processing program 411 may be implemented by dedicated hardware.

The image processing device 100 according to this embodiment may not perform processing in real time. For example, the image processing device 100 may be provided in such a mode as a cloud service in which at least one server device implements processing according to this embodiment. In this case, the user uses his/her terminal to transmit the input image 412 and the registered image 413 to the server device (cloud side). The server device performs image processing on the transmitted input image 412 and registered image 413 according to this embodiment. Further, the server device may not necessarily perform all of the functions (processes) but the user's terminal and the server device may cooperate to implement image processing according to this embodiment.

The display device 16 displays GUI (graphical user interface) screens provided by the operating system, images generated by execution of the image processing program 411, and others.

The input device 440 is typically composed of a keyboard, a mouse, a touch panel, and the like. The input device 440 outputs the contents of an instruction received from the user to the CPU 401 and the like.

### <General Outline>

First to fifth embodiments will be described below in sequence. Hardware configurations of image processing devices according to the first to fifth embodiments are the same as the hardware configuration described above. Therefore, descriptions of the hardware configurations are omitted here.

Characteristic configurations of the first to fifth embodiments can be naturally combined with one another without deviating from the gist of the present invention.

### [First Embodiment]

### <Functional Configuration>

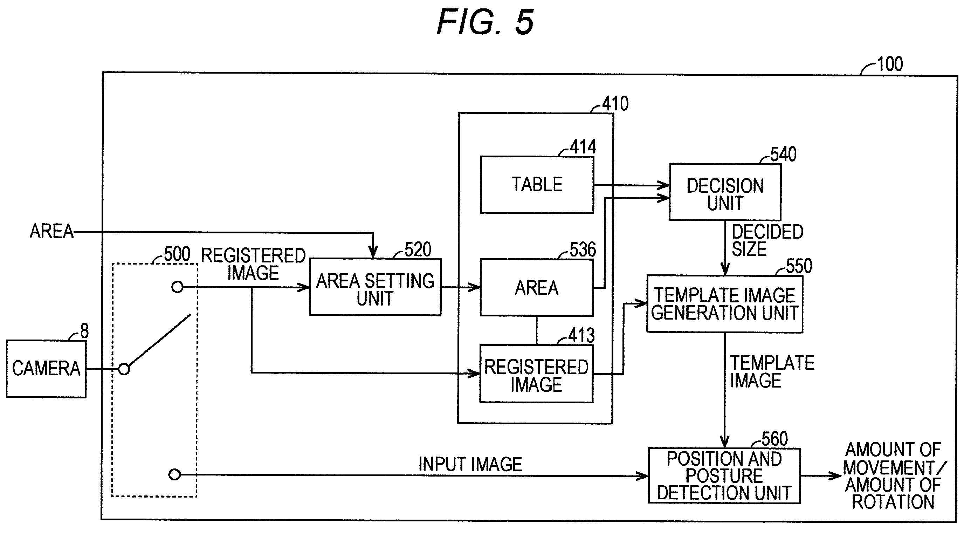

Fig. 5 is a block diagram illustrating an example of a functional configuration of the image processing device 100 according to a first embodiment. The functional configuration of the image processing device 100 will be described with reference to Fig. 5.

The image processing device 100 includes the auxiliary storage device 410, the area setting unit 520, the decision unit 540, the template image generation unit 550, and a position and posture detection unit 560. The auxiliary storage device 410 has the registered image 413, the table 414, and an area 536 associated with the registered image 413.

The image processing device 100 has a registration mode for performing a template registration process and an inspection mode for inspecting the work 2, as operation modes. The user can switch between the registration mode and the inspection mode by the input device 440. When the inspection mode is changed, a switch 500 is shifted in position. Typically, the registration mode is implemented off-line and the inspection mode is implemented on-line. The registration mode and the inspection mode will be described below.

### (Registration mode)

When the image processing device 100 is in the registration mode, the camera 8 outputs a registered image acquired by shooting the work to the auxiliary storage device 410 and the area setting unit 520.

The area setting unit 520 accepts the setting of an area in the registered image. For example, the user sets an area in the registration image displayed on the display device 16 by the use of the input device such as the mouse 18. The setting of the area will be described later in detail. The area setting unit 520 stores the area 536 set by the user in the registered image (set area) in the auxiliary storage device 410 in association with the registered image.

The auxiliary storage device 410 stores the table 414 in which the image sizes and the amounts of operation in template matching are associated with each other. The table 414 will be described later in detail.

### (Inspection mode)

In the inspection mode, the image processing device 100 executes template matching.

As described above, the decision unit 540 decides on an image size (decided size) in which the amount of operation in the template matching process associated in advance with the image size becomes relatively small, from among the image sizes within a predetermined range with respect to the size of the set area. More specifically, the decision unit 540 refers to the predetermined range in the table 414 with respect to the size of the set area to decide on the image size (decided size) in which the amount of operation in the template matching process becomes the smallest. The decided size will be described later in detail. The decision unit 540 outputs the decided size to the template image generation unit 550.

The template image generation unit 550 generates a template image from the registered image 413 based on the information on the area of the image size decided by the decision unit 540. The template image generation unit 550 typically cuts out the template image in the image size decided by the decision unit 540 from the registered image 413. The template image generation unit 550 outputs the template image to the position and posture detection unit 560.

The template image generation unit 550 also cuts out the template image such that the center of the template image aligns with the center of the set area. There is a high possibility that the user sets the area with a registration target object centered. Accordingly, aligning the center of the set area with the center of the template image would more likely leave a necessary portion of the image including the registration target object. The template image generation unit 550 further may generate one template image by performing a statistical process such as averaging a plurality of images.

The camera 8 outputs the input image acquired by shooting the work 2 as an inspection target object to the position and posture detection unit 560. The position and posture detection unit 560 performs template matching of the input image from the camera 8 and the template image from the template image generation unit 550.

The position and posture detection unit 560 typically performs template matching by rotation invariant phase only correlation (RIPOC). The position and posture detection unit 560 searches the input image for the area matching the template, and outputs the amount of movement and the amount of rotation of the work 2 included in the input image relative to the work 2 included in the registered image. The RIPOC processing will be described later in detail.

The method for template matching is not limited to RIPOC. For example, the position and posture detection unit 560 may use any template matching method such as phase only correlation (POC) or a matching process with Fourier-Mellin transforms.

The matching process using Fourier-Mellin transforms is described in detail in "Symmetric Phase-Only Matched Filtering of Fourier-Mellin Transforms for Image Registration and Recognition, IEEE TRANSACTIONS ON PATTERN ANALYSIS AND MACHINE INTELLIGENCE, VOL.I6, NO.12, DECEMBER 1994."

In addition, as a matching method using frequency information, the technique described in "Merging of Image Signal Processing and Image Pattern Recognition - DCT Code Only Correlation and Its Applications", Hitoshi Kiya, Tokyo Metropolitan University, the Faculty of System Design, Workshop for Practical Utilization of Dynamic Image Processing 2007 (March 8 and 9, 2007)" may be used.

### <Set Area>

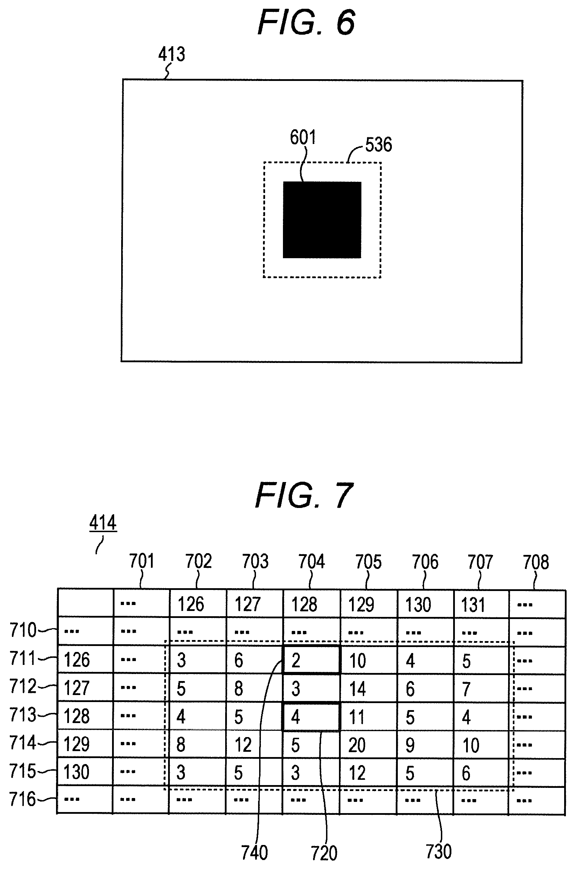

Fig. 6 is a diagram illustrating a set area in a registered image. The set area will be described in detail with reference to Fig. 6.

As illustrated in Fig. 6, a registration target object 601 such as the work 2 is seen in the registered image 413. The area setting unit 520 accepts a setting of an area in the registered image 413 as described above. The user sets an area by surrounding the registration target object 601 while viewing the registered image 413 displayed on the display device 16. For example, the user surrounds the registration target object 601 by a square such as an area 536. The shape of the area 536 is not limited to square but may be any one of circle, oval, polygons, and other shapes, for example.

The area 536 set by the user is stored in the auxiliary storage device 410 in association with the registered image 413. The area 536 is typically stored as coordinate values in the registered image 413.

In this manner, the user can visually check and set the area in the registered image for use in the template matching process to eliminate unnecessary areas not including the registration target object 601. This raises the accuracy of template matching and speeds up the template matching process.

### <Table>

Fig. 7 is a diagram illustrating a data structure of the table 414. The data structure of the table 414 will be described with reference to Fig. 7.

The table 414 prescribes the relationship between the image size and the amount of operation in template matching. The table 414 is typically configured as a two-dimensional table prescribing the vertical and horizontal dimensions of the image and the amounts of operation in template matching.

As shown in Fig. 7, the table 414 prescribes the amounts of operation in template matching corresponding to horizontal widths 701 to 707 and vertical widths 710 to 716 of the image. For example, the amount of operation is 3 for the image with a horizontal width of 126 pixels (horizontal width 702) and a vertical width of 126 pixels (vertical width 711), and the amount of operation is 2 for the image with a horizontal width of 128 pixels (horizontal width 704) and a vertical width of 126 pixels (vertical width 711).

The amount of operation is typically an index of operation time taken for template matching. The operation time is measured by actually performing template matching with images in a plurality of sizes at a predetermined personal computer. The image processing device 100 stores in the table 414 the image sizes and the indexes of operation time for template matching with the images in association with each other.

The operation time may not necessarily be the operation time for the entire template matching process but may be the operation time for the partial template matching process. For example, the operation time is defined as the time taken for RIPOC in template matching by which to detect the position of the inspection target object from the input image.

The amount of operation may be an index based on a Fourier transform in RIPOC. Two-dimensional discrete Fourier transform (DFT) can be implemented by applying a one-dimensional DFT in two stages. Accordingly, the table 414 may be formed as a one-dimensional table storing indexes of execution time of a one-dimensional DFT. For example, in the case of performing a DFT on an image with a size of M × N, the amount of operation is output as the sum of the amount of operation in a one-dimensional DFT with a dimension of M and the amount of operation in a one-dimensional DFT with a dimension of N.

### <Approximate Expression>

The amount of operation may be defined by an approximate expression, not by the table. For example, the amount of operation may be defined from the image size and the amount of calculation. In this case, a theoretical formula is used. It is generally known that a one-dimensional DFT with a size of N can be calculated by the amount of calculation of O (N∑ni) using an algorithm of Cooley-Turky. Accordingly, the amount of operation may be defined by setting O (N∑ni) (ni denotes a prime number resulting from prime factorization of N) as the amount of operation in a one-dimensional DFT.

### <Decided Size>

The decided size will be described with reference again to Fig. 7. The decision unit 540 decides on the image size (decided size) in which the amount of operation in the template matching process becomes relatively small, from among the image sizes within a predetermined range in the table 414 with respect to the size of the set area.

For example, the size of the set area is assumed as 128 × 128. The decision unit 540 thus refers to a predetermined range 730 in the table 414 with respect to a size 720 (128 × 128) to decide on the image size in which the amount of operation becomes the smallest. The image size with the smallest amount of operation within the range 730 is a size 740 (128 × 126). The decision unit 540 thus decides on the size 740 (128 × 126) as the decided size. The information on the decided size is output to the template image generation unit 550.

The magnitude of the predetermined range in the table 414 referred to by the decision unit 540 is set at the time of designing of the image processing device 100. The magnitude of the range may be set to be changeable by the user. For example, the magnitude of the range is set to be changeable pixel by pixel in both the vertical width and the horizontal width. In addition, the image sizes prescribed in the table 414 are not necessarily integer numbers but are only required to be positive numbers.

The decision unit 540 may refer to the table 414 in the range of values smaller than the vertical width of the set area to decide on an image size with a vertical width smaller than the vertical width of the set area. Similarly, the decision unit 540 may refer to the table 414 in the range of values smaller than the horizontal width of the set area to decide on an image size with a horizontal width smaller than the horizontal width of the set area. This further speeds up the template matching process.

### <Template matching process>

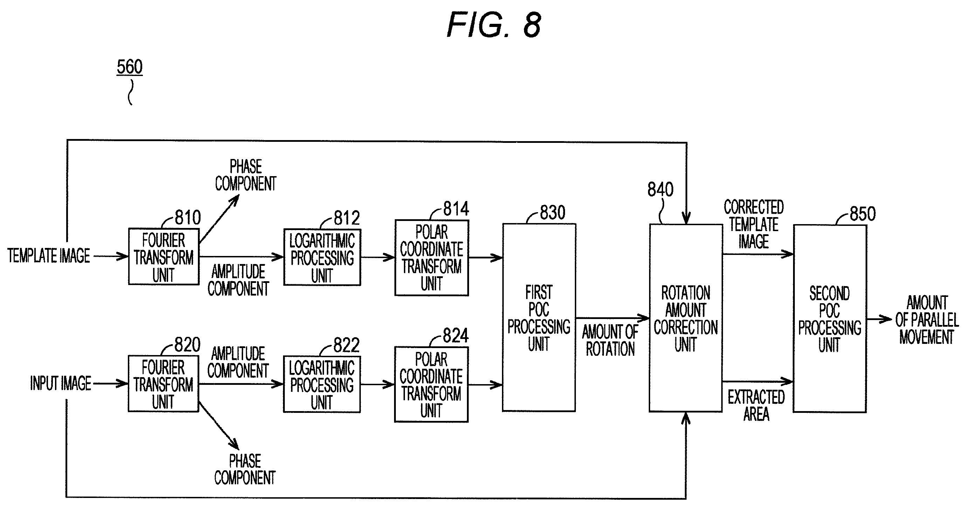

Fig. 8 is a block diagram illustrating an example of a functional configuration of the position and posture detection unit 560. As an example of template matching process, RIPOC will be described with reference to Fig. 8.

The position and posture detection unit 560 executes RIPOC. In the RIPOC, it is determined how much the inspection target object seen in the input image is rotated relative to the template image. The RIPOC also includes a process for correcting the amount of rotation of the template image and a process for calculating the degree of similarity and the amount of parallel movement between a corrected template acquired by the correction of the amount of rotation and the input image.

More specifically, the position and posture detection unit 560 includes a Fourier transform unit 810, a Fourier transform unit 820, a logarithmic processing unit 812, a logarithmic processing unit 822, a polar coordinate transform unit 814, a polar coordinate transform unit 824, a first POC processing unit 830, a rotation amount correction unit 840, and a second POC processing unit 850.

The Fourier transform unit 810 calculates frequency information (amplitude component and phase component) included in the template image. The Fourier transform unit 820 sets a search range centering on a position where the inspection target object is likely to exist in the input image, and cuts out a template portion corresponding to the search range from the input image. The size of the cut area is typically the same as the size of the template image. The Fourier transform unit 820 also calculates frequency information (amplitude component and phase component) included in the cut area. In the RIPOC processing, the phase component is not essential and may not be calculated.

The logarithmic processing unit 812 and the polar coordinate transform unit 814 process logarithmically the amplitude component of the template image and transform the same to polar coordinates. Similarly, the logarithmic processing unit 822 and the polar coordinate transform unit 824 process logarithmically the amplitude component of the input image and transform the same to polar coordinates. By the transform to the polar coordinates, the amount of rotation is expressed as a coordinate point on two-dimensional coordinates.

The first POC processing unit 830 calculates the degree of similarity and the amount of parallel movement (equivalent to the amount of rotation) between the resultant polar coordinates output from the polar coordinate transform unit 814 and the polar coordinate transform unit 824. In the POC processing, the template image and the input image are sequentially shifted from each other and the correlation value between spatial frequency components included in the two images to search for the value with the highest degree of similarity (peak value of POC). The first POC processing unit 830 determines the position where the degree of similarity becomes highest between the resultant polar coordinates, and outputs the amount of rotation corresponding to the position to the rotation amount correction unit 840.

The rotation amount correction unit 840 rotates and corrects the template image according to the amount of rotation calculated by the first POC processing unit 830. That is, the rotation amount correction unit 840 rotates and corrects the first POC processing unit 830 and the template image to generate a corrected template.

As a method for rotating and correcting the template image, the rotation amount correction unit 840 may rotate the template image in a real space. In the case where the second POC processing unit 850 treats a frequency space, it is not necessary to rotate the template image in a real space, but instead of this, post-Fourier transform data (amplitude information and phase information) as an internal expression in the POC processing may be rotated.

The second POC processing unit 850 calculates the degree of similarity and the position (parallel movement amount) between the corrected template image and the input image. The second POC processing unit 850 shows an area where the position with the highest degree of similarity matches the corrected template image included in the input image. The second POC processing unit 850 outputs position information including the amount of parallel movement, the amount of rotation, and magnification ratio.

### <Control Flow>

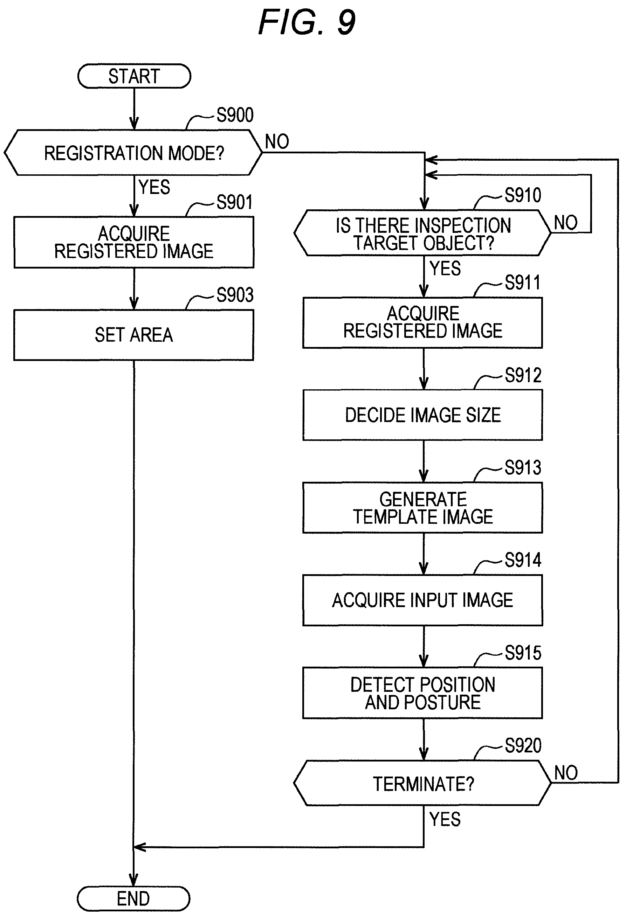

Fig. 9 is a flowchart of part of a process executed by the image processing device 100. The process described in Fig. 9 is implemented by the CPU 401 executing a program. In another aspect, the partial or entire process may be executed by a circuit element or other hardware.

Referring to Fig. 9, at step S900, the CPU 401 determines the operation mode of the image processing device 100. When determining the operation mode of the image processing device 100 as the registration mode (YES at step S900), the CPU 401 switches the control to step S901. When not determining as such (NO at step S901), the CPU 401 switches the control to step S910. Typically, the registration mode is implemented off-line and the inspection mode is implemented on-line.

At step S901, the CPU 401 acquires a registered image acquired by the camera 8 shooting the work 2.

At step S903, the CPU 401 causes the area setting unit 520 to accept a setting of an area in the registered image. In addition, at step S903, the CPU 401 stores the registered image and the accepted area (set area) associated with each other in the auxiliary storage device 410.

At step S910, the CPU 401 determines whether there exists an inspection target object. When determining that there exists an inspection target object (YES at step S910), the CPU 401 switches the control to step S911. When not determining as such (NO at step S910), the CPU 401 switches the control to step S910.

At step S911, the CPU 401 acquires the registered image stored in the auxiliary storage device 410 and the set area associated with the registered image.

At step S912, the CPU 401 causes the decision unit 540 to refer to the predetermined range in the table 414 with respect to the size of the set area, and decide on the image size (decided size) in which the amount of operation in the template matching process becomes relatively small.

At step S913, the CPU 401 causes the template image generation unit 550 to cut out the template image in the decided size from the registered image 413. At that time, the CPU 401 cuts out the template image such that the center of the template image aligns with the center of the set area.

At step S914, the CPU 401 acquires as input image an image acquired by the camera 8 shooting the work 2 as an inspection target object. The input image may be acquired at any time prior to step S915.

At step S915, the CPU 401 causes the position and posture detection unit 560 to perform template matching with the input image and the template image.

At step S920, the CPU 401 determines whether to terminate the inspection. When accepting an order for termination of the inspection (YES at step S920), the CPU 401 terminates the process. When not accepting such an order (NO at step S920), the CPU 401 switches the control to step S910.

### <Advantages>

In this manner, the image processing device 100 in this embodiment performs template matching with the template image of the image size in which the amount of operation in template matching becomes small, thereby to speed up the template matching process.

In addition, the image processing device 100 generates the template image from the registered image such that the center of the template image aligns with the center of the set area to increase the possibility that the necessary portion including the registration target object remains. This speeds up the template matching process while maintaining the stable accuracy of template matching.

### [Second Embodiment]

An image processing device 100A according to a second embodiment will be described below. The image processing device 100A according to this embodiment is different from the image processing device 100 according to the first embodiment in cutting out an area where the degree of variation in an area in the registered image sandwiched between an outer frame of the same size as the decided size and an inner frame inside the outer frame (hereinafter, referred to as "boundary area") as a template image. Therefore, the center of the set area and the center of the template image may not necessarily align with each other.

### <General Outline>

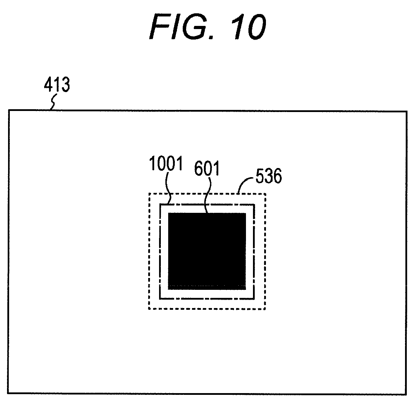

Fig. 10 is a diagram illustrating a set area. The general outline of the image processing device 100A will be described with reference to Fig. 10.

As illustrate in Fig. 10, the area 536 set by the user is frequently larger than the registration target object 601 to include the registration target object 601. In general, when the area 536 is set such that an object different from the registration target object 601 is included in the area sandwiched between the area 536 and a frame 1001, the accuracy of template matching becomes lower. At that time, a larger pixel change occurs in the area sandwiched between the area 536 and the frame 1001. That is, the degree of variation in the pixels in the area becomes higher.

Accordingly, the image processing device 100A generates the template image such that the degree of variation in the area becomes low, thereby to speed up the template matching process while maintaining the accuracy of template matching.

### <Functional configuration>

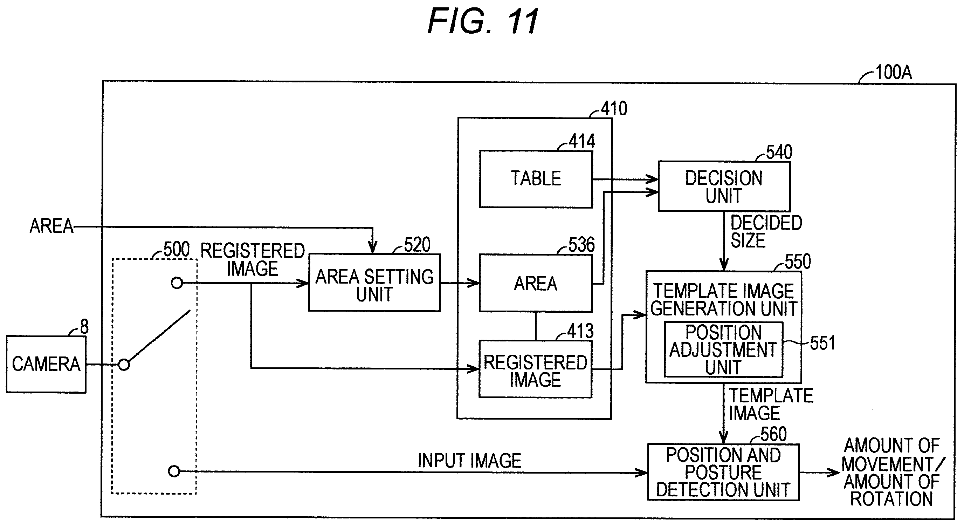

Fig. 11 is a block diagram illustrating an example of a functional configuration of the image processing device 100A. The functional configuration of the image processing device 100A will be described with reference to Fig. 11. The image processing device 100A according to this embodiment is different from the image processing device 100 according to the first embodiment in that the template image generation unit 550 has a position adjustment unit 551.

The template image generation unit 550 has the position adjustment unit 551. The position adjustment unit 551 scans the registered image to decide on an area in the registered image where the degree of variation in the boundary area becomes relatively small (hereinafter, also referred to as "decided area").

The template image generation unit 550 cuts out the template image from the registered image at the position decided by the position adjustment unit 551. The method for cutting out the template image by the template image generation unit 550 will be described later in detail.

### <Degree of Variation>

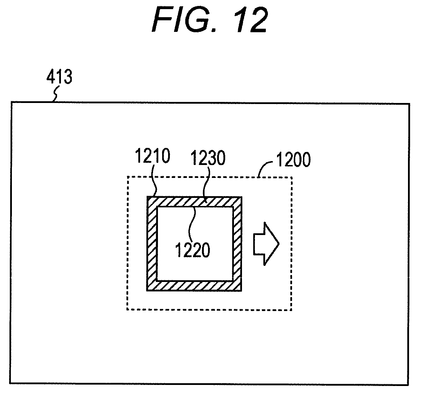

Fig. 12 is a diagram illustrating the state where the registered image is scanned to calculate the degree of variation in the boundary area. The operations of the position adjustment unit 551 will be described in detail with reference to Fig. 12.

The image processing device 100A scans an area 1200 in the registered image 413 enlarged with the set area centered by a predetermined width. The predetermined width is set at the time of designing. The predetermined width may be settable by the user. The area 1200 may be the area 436 set by the user.

The position adjustment unit 551 scans the area 1200 to calculate the degree of variation in a boundary area 1230 sandwiched between an outer frame 1210 as an area of the same size as the decided size and an inner frame 1220 inside the outer frame 1210. The shape of the inner frame 1220 may not necessarily be a square but may be a circle, an oval, a polygon, or any other shape.

The position adjustment unit 551 decides on an area (decided area) where the calculated degree of variation becomes the smallest. The template image generation unit 550 cuts out the decided area of the size matching the decided size as a template image. The template image generation unit 550 outputs the cut-out template image to the position and posture detection unit 560. The position and posture detection unit 560 performs template matching with the template image.

### <Advantage>

In this manner, the image processing device 100A in this embodiment cuts out an area where the degree of variation in the boundary area becomes small from the registered image and generates the cut-out image as a template image. This speeds up the template matching process while maintaining the accuracy of template matching.

### [Third Embodiment]

An image processing device 100B according to a third embodiment will be described. The image processing device 100B according to this embodiment is different from the image processing device 100 according to the first embodiment in that, when there is no amount of operation associated with the image size in the table 414, the amount of operation is estimated based on the known amounts of operation associated with the image sizes within the predetermined range with respect to the image size.

### <General Outline>

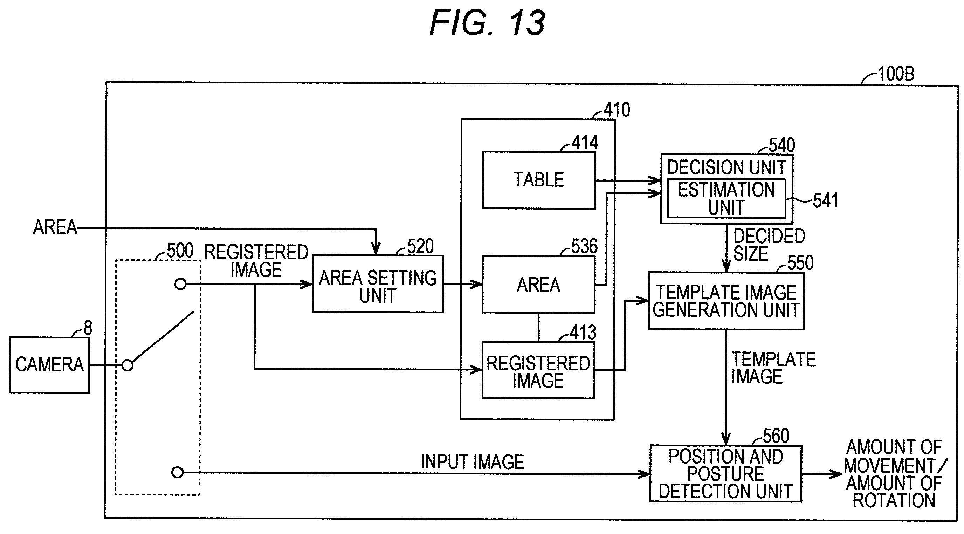

Fig. 13 is a block diagram illustrating an example of a functional configuration of the image processing device 100B. The functional configuration of the image processing device 100B will be described with reference to Fig. 13. The image processing device 100B according to this embodiment is different from the image processing device 100 according to the first embodiment in that the decision unit 540 has an estimation unit 541.

The decision unit 540 refers to the predetermined range in the table 414 with respect to the size of the set area to decide on the image size in which the amount of operation in the template matching process becomes relatively small. At that time, when there is any image size with no amount of operation prescribed in the table 414, the estimation unit 541 estimates the unknown amount of operation in template matching corresponding to the image size.

Specifically, the estimation unit 541 refers to the predetermined range in the table 414 with respect to the image size corresponding to the unknown amount of operation. The estimation unit 541 estimates the unknown amount of operation based on the known amounts of operation within the referred range. For example, the estimation unit 541 estimates the amount of operation by averaging the known amounts of operation. The estimation unit 541 may also assign a large weight to the amounts of operation corresponding to image sizes closer to the image size corresponding to the unknown amount of operation and calculate a weighted mean of the amounts of operation, and set the weighed mean as the estimated amount of operation.

### <Advantage>

In this manner, when there is any unknown amount of operation prescribed in the table, the image processing device 100B of this embodiment can estimate the unknown amount of operation from the known amounts of operation to decide on an appropriate image size. In addition, the image processing device 100B of this embodiment can reduce the capacity of the table.

### [Fourth Embodiment]

An image processing device C according to a fourth embodiment will be described. The image processing device C according to this embodiment is different from the image processing device 100 according to the first embodiment in that the template image is generated in the registration mode, not in the inspection mode. That is, the image processing device C generates the template image off-line, not on-line.

### <General Outline>

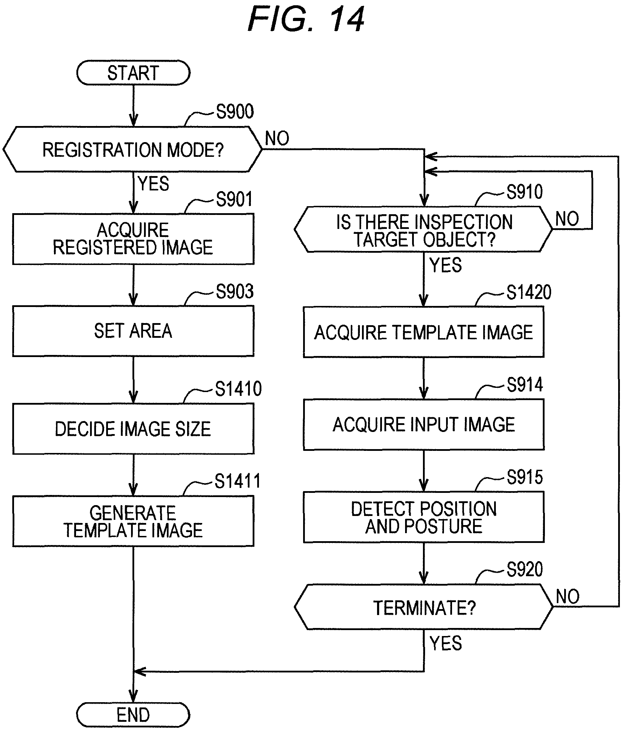

Fig. 14 is a flowchart of part of a process executed by the image processing device 100C. The process described in Fig. 14 is implemented by the CPU 401 executing a program. In another aspect, the partial or entire process may be executed by a circuit element or other hardware. Hereinafter, descriptions will be given as to only the steps different from those in the process executed by the image processing device 100 according to the first embodiment. Descriptions of the other same steps will not be repeated.

Referring to Fig. 14, when the operation mode of the image processing device 100C is the registration mode (YES at step S900), steps S1410 and S1411 are executed.

At step S1410, the CPU 401 causes the decision unit 540 to refer to the predetermined range in the table 414 with respect to the size of the set area to decide on the image size (decided size) in which the amount of operation in the template matching process becomes relatively small. At step S1410, the CPU 401 stores the template image in the auxiliary storage device 410.

At step S1411, the CPU 401 causes the template image generation unit 550 to cut out the template image in the decide size from the registered image 413. At that time, the CPU 401 cuts out the template image such that the center of the template image aligns with the center of the set area.

When the operation mode of the image processing device 100C is the inspection mode (NO at step S900), step S1420 is executed. At step S1420, the CPU 401 acquires the template image stored in the auxiliary storage device 410.

### <Advantage>

In this manner, the image processing device 100C of this embodiment generates the template image in advance at the time of registration (off-line) to speed up the template matching executed at the time of inspection (off-line).

### [Fifth Embodiment]

An image processing device D according to a fifth embodiment will be described below. The image processing device D according to this embodiment is different from the image processing device 100 according to the first embodiment in further including the function of updating the table.

### <Functional Configuration>

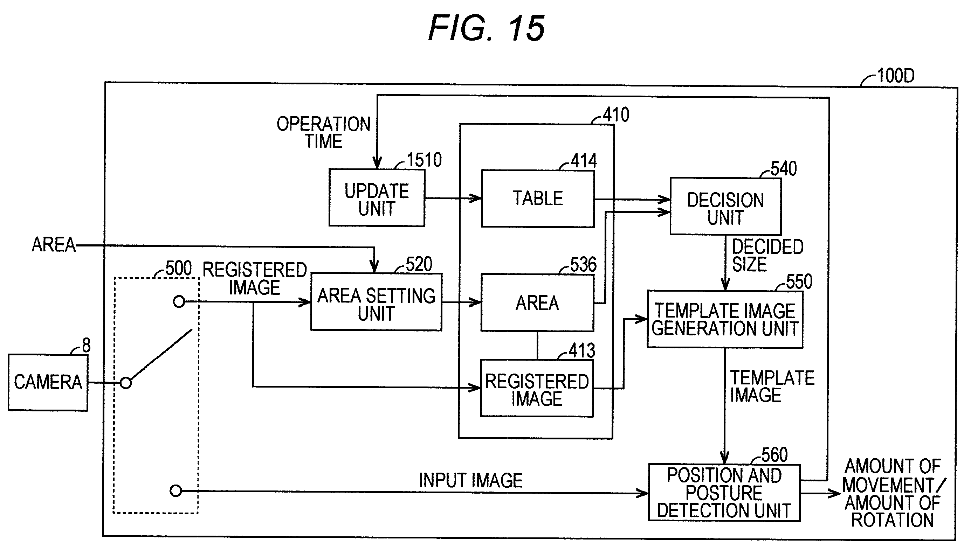

Fig. 15 is a block diagram illustrating an example of a functional configuration of the image processing device 100D. The functional configuration of the image processing device 100D will be described with reference to Fig. 15. The image processing device 100D according to this embodiment is different from the image processing device 100 according to the first embodiment in including an update unit 1510. Other functions of the image processing device 100D are the same as those of the image processing device 100. Accordingly, descriptions of the same functions will not be repeated.

The operation time in template matching depends on the environments for the image processing device such as the structures of an MPU (micro-processing unit), a memory, a cache, and the like, and the ratio of memory usage by a software program driven at the time of template matching, and it is thus difficult to predict the operation time in a theoretical manner. Accordingly, the table 414 needs to be updated when any one of the environments for the image processing device becomes changed.

The update unit 1510 updates the table 414. More specifically, the position and posture detection unit 560 performs the template matching process with the input images in a plurality of sizes and the template image. The position and posture detection unit 560 outputs the operation times taken for the template matching process on the input images to the update unit 1510.

The update unit 1510 updates the existing table 414 based on the operation times corresponding to the image sizes output from the position and posture detection unit 560.

### <Advantage>

In this manner, when any one of the environments for the image processing device 100D of this embodiment is changed, the image processing device 100D updates the table according to the environments for the image processing device 100D. Accordingly, it is possible to calculate the precise operation time in template matching suited to the environments for the image processing device, and speed up the template matching process in a more reliable manner.

It should be considered that the embodiments disclosed herein are merely examples in all respects and are not limitative. The scope of the present invention is intended to be defined not by the foregoing descriptions but by the claims, including all modifications in the meaning and within the range equivalent to those of the claims.

### Reference Signs List

- 1: Image processing system
- 2: Work
- 8: Camera
- 12: Manufacturing device
- 14: Conveyance mechanism
- 16: Display device
- 18: Mouse
- 100, 100A, 100B, 100C, 100D: Image processing device
- 121, 730: Range
- 230: Operation amount information
- 400: Bus
- 401: CPU
- 402: RAM
- 403: ROM
- 404: Network I/F
- 405: Camera I/F
- 407: Memory card I/F
- 410: Auxiliary storage device
- 411: Image processing program
- 412: Input image
- 413: Registered image
- 414: Table
- 430: Memory card
- 440: Input device
- 500: Switch
- 520: Area setting unit
- 536, 1200: Area
- 540: Decision unit
- 541: Estimation unit
- 550: Template image generation unit
- 551: Position adjustment unit
- 560: Position and posture detection unit
- 601: Registration target object
- 701 to 707: Horizontal width
- 710 to 716: Image vertical width
- 810, 820: Fourier transform unit
- 812, 822: Logarithmic processing unit
- 814, 824: Polar coordinate conversion unit
- 830: First POC processing unit
- 840: Rotation amount correction unit
- 850: Second POC processing unit
- 1001: Frame
- 1210: Outer frame
- 1220: Inner frame
- 1230: Boundary area
- 1510: Update unit

## Claims

1. An image processing method for performing a matching process using a template, comprising:
accepting a setting of an area in a registered image acquired by shooting a target object as a reference;
deciding on an image size in which the amount of operation in the matching process associated in advance with the image size becomes relatively small, from among image sizes within a predetermined range with respect to the size of the accepted area; and
generating the template from the registered image based on information on the area of the decided image size.

2. The image processing method according to claim 1, wherein the deciding includes deciding an image size in which the amount of operation in the matching process becomes the smallest, from among the image sizes within the predetermined range with respect to the size of the accepted area.

3. The image processing method according to claim 1 or 2, wherein the deciding includes deciding an image size with a vertical width smaller than the vertical width of the size of the accepted area.

4. The image processing method according to any one of claims 1 to 3, wherein the deciding includes deciding an image size with a horizontal width smaller than the horizontal width of the size of the accepted area.

5. The image processing method according to any one of claims 1 to 4, wherein the center of the area of the decided image size aligns with the center of the accepted area.

6. The image processing method according to any one of claims 1 to 4, wherein the generating includes generating the template from the registered image such that the degree of variation in an area in the registered image sandwiched between an outer frame of the same size as the decided image size and an inner frame inside the outer frame becomes relatively small.

7. The image processing method according to any one of claims 1 to 6, wherein the deciding includes, when the amount of operation corresponding to the image size is unknown, estimating the amount of operation associated with the image size based on known amounts of operation associated with the image sizes within the predetermined range with respect to the image size.

8. The image processing method according to any one of claims 1 to 7, wherein the amount of operation is the actually measured operation time of the entire or partial matching process.

9. The image processing method according to any one of claims 1 to 7, wherein the amount of operation is decided based on the image size and the amount of calculation in the matching process.

10. The image processing method according to any one of claims 1 to 7, wherein
the matching process includes a process for detecting the position of an inspection target object from the input image acquired by shooting the inspection target object, and
the amount of operation is decided based on the time taken for detecting the position.

11. The image processing method according to any one of claims 1 to 7, wherein the amount of operation is decided based on the time taken for a Fourier transform in the matching process.

12. The image processing method according to any one of claims 1 to 11, further including updating the amount of operation associated in advance with the image size.

13. An image processing device for performing a matching process using a template, comprising:
an acceptance unit for accepting a setting of an area in a registered image acquired by shooting a target object as a reference;
a decision unit for deciding on an image size in which the amount of operation in the matching process associated in advance with the image size becomes relatively small, from among image sizes within a predetermined range with respect to the size of the accepted area; and
a generation unit for generating the template from the registered image based on information on the area of the decided image size.

14. The image processing device according to claim 13, wherein
the image processing device further includes a storage unit for storing a table prescribing the relationship between the image size and the amount of operation in the matching process, and
the decision unit is configured to refer to the table to decide on an image size in which the amount of operation in the matching process becomes relatively small.

15. An image processing program for causing a computer to execute a matching process using a template to execute:
accepting a setting of an area in a registered image acquired by shooting a target object as a reference;
deciding on an image size in which the amount of operation in the matching process associated in advance with the image size becomes relatively small, from among image sizes within a predetermined range with respect to the size of the accepted area; and
generating the template from the registered image based on information on the area of the decided image size.
